# EUROPÄISCHE PATENTSCHRIFT

(11) **EP 1 123 460 B1**
(45) Veröffentlichungstag und Bekanntmachung des Hinweises auf die Patenterteilung: **06.08.2003**
(21) Anmeldenummer: 99953911.7
(22) Anmeldetag: 21.10.1999
(51) Int. Cl.: F02M 35/024

(54) **FILTER, INSBESONDERE FÜR DIE ANSAUGLUFT EINER BRENNKRAFTMASCHINE**
FILTER, ESPECIALLY FOR THE INTAKE AIR OF AN INTERNAL COMBUSTION ENGINE
FILTRE, NOTAMMENT POUR L'AIR ASPIRE D'UN MOTEUR A COMBUSTION INTERNE

(30) Priorität: 24.10.1998 DE 19849089
(43) Veröffentlichungstag der Anmeldung: 16.08.2001
(73) Patentinhaber: FILTERWERK MANN + HUMMEL GMBH, 71631 Ludwigsburg (DE)
(72) Erfinder: ANDRESS, Heinz, D-71729 Erdmannhausen (DE); MAYER, Gerhard, D-74385 Pleidelsheim (DE); SPOHRER, Peter, D-74246 Eberstadt (DE)
(74) Vertreter: Voth, Gerhard
(86) Internationale Anmeldenummer: EP9908000
(87) Internationale Veröffentlichungsnummer: WO00025016

(56) Entgegenhaltungen:
- EP-A- 0 673 280
- WO-A-95/19832
- US-A- 4 488 889
- US-A- 4 759 783

## Beschreibung

Die Erfindung betrifft ein Filter nach dem Oberbegriff des unabhängigen Anspruchs 1.

Außerdem betrifft die Erfindung ein zum Einbau in das Filter geeignetes Filterelement.

Aus der EP 0 673 280 ist ein Gehäusefilter bekannt. Dieses Gehäusefilter weist ein Filterelement auf, das auf einem Stützrohr befestigt wird. Das Filter wird mit einem Deckel verschlossen und an einer geeigneten Trägerstruktur befestigt. Die Anwendung solcher Filter, insbesondere für die Ansaugluft von Brennkraftmaschinen, erfordert eine Anpassung der Filterkapazität an die entsprechende Maschine. Es hat sich gezeigt, daß insbesondere im Nutzfahrzeugbereich das Filter optimal auf die entsprechende Brennkraftmaschine abzustimmen ist. Dies bedeutet, daß je nach Leistung der Brennkraftmaschine eine entsprechende Filterfläche und damit auch ein entsprechendes Filtervolumen zur Verfügung gestellt werden muß. Da jeder Filtertyp ein eigenes angepaßtes Gehäuse aufweist, sind die Fertigungskosten der Vielzahl unterschiedlicher Filtertypen nicht unerheblich.

Aus der US 4,759,783 ist ein Luftfilter bekannt. Dieser besteht aus einem Filterelement, welches auf einem Stützrohr angeordnet ist. Dieses Filterelement ist in einem Gehäuse befestigt, welches einen Deckel, einen Boden und ein Mittelteil aufweist. Das Filterelement ist zwischen diesen genannten Teilen verspannt. Ein Nachteil der Einrichtung ist darin zu sehen, dass Fertigungstoleranzen aufgrund der Starrheit des gesamten Systems nicht ausgeglichen werden können und deshalb eine sehr hohe Genauigkeit bei der Anpassung der einzelnen Komponenten erforderlich ist.

Der Erfindung liegt daher die Aufgabe zugrunde, ein Filter zu schaffen, welches universell einsetzbar ist und kostengünstig hergestellt werden kann. Diese Aufgabe wird ausgehend von dem Oberbegriff des unabhängigen Anspruchs 1 durch dessen kennzeichnenden Merkmale gelöst.

Gemäß der Erfindung ist das Filterelement auf einem Stützrohr angeordnet, welches insbesondere aus Kunststoff besteht. Dieses Stützrohr ist zumindest mit der Bodenscheibe formschlüssig verbunden. Im Bereich dieser formschlüssigen Verbindung weist das Ende des Stützrohrs eine elastische Zone auf. Dadurch kann das Stützrohr die Deformation der elastischen Scheibe mitmachen. Durch diese Maßnahme ist ein zuverlässiger Formschluß zwischen Stützrohr und Bodenscheibe gewährleistet. Wird das Filterelement im Filtergehäuse montiert, ergibt sich am Deckel des Filtergehäuses eine Deformation des Filterelements. Dadurch wird zum einen eine Fixierung des Filterelements und zum anderen eine Dichtung gegenüber der Gehäusewand des Filtergehäuses erzielt. Durch die elastische Zone am Stützrohr wird die notwendige Montagekraft für das Filterelement verringert. Außerdem verringert sich die Gefahr eines Abscherens der Bodenscheibe von dem Rohrende während der Montage.

Ein weiterer Vorteil der Erfindung liegt darin, daß durch die Schaffung von Komponenten im Bereich des Filtergehäuses eine hohe Variabilität erreicht wird. So ist es möglich, das zylinderförmige Mittelteil mit unterschiedlichen Längen zu versehen und somit dieses an unterschiedliche Kapazitäten des Filterelements anzupassen. Außerdem besteht die Möglichkeit, den reinluftseitigen Deckel an verschiedene Befestigungsstrukturen oder Reinluftanschlüsse anzupassen. Es besteht ferner die Möglichkeit, durch eine Variation des Topfes diesen mit zusätzlichen Funktionen auszugestalten, beispielsweise ist es möglich, einen Vorabscheider im Topf zu integrieren oder eine Staub/Wasser-Austragsöffnung vorzusehen. Eine Wasseraustragsöffnung kann auch am Gehäusemantel angeordnet sein.

Gemäß einer Ausgestaltung der Erfindung weist den reinluftseitigen Deckel einen äußeren Flansch auf, der an den Reinluftanschluß angepaßt werden kann. Ferner weist der Deckel einen inneren Flansch auf, dieser dient als Radial- bzw. Axialdichtung für das im Gehäuse angeordnete Filterelement. Im Topf sind zur Lagestabilisierung des Filterelements eine oder mehrere Abstützelement vorgesehen. Selbst bei starken Umwelteinflüssen, wie z. B. Erschütterungen, Schwingungen und Stößen ist damit gewährleistet, daß das Filterelement in seiner Sollposition gehalten wird.

Eine weitere Ausgestaltung der Erfindung sieht vor, am Mittelteil Befestigungselemente anzuordnen; damit kann das gesamte Filtersystem an einer Trägerstruktur fixiert werden. Die Befestigungselemente sind beispielsweise Fußteile mit eingelegten oder eingepreßten Gewindeelementen. Es besteht auch die Möglichkeit, die Gewindeelemente an die Fußteile anzuklammern.

Innerhalb des Filterelements kann ein Sicherheitsfilter oder ein Sekundärelement angeordnet werden. Dieses Element hat die Aufgabe, den Eintrag von Schmutz in den Reinluftbereich bei einem Wechsel des Filterelements zu verhindern. Insbesondere bei sehr hohem Staubanfall besteht die Gefahr, daß der auf dem Filterelement angelagerte Staub bei dem Austausch des Filterelements von diesem abfällt. Sofern ein Sekundärelement eingebaut ist, kann dies den Schmutz wirksam zurückhalten. Dieses Sekundärelement kann beispielsweise über eine Schraubverbindung an dem Deckel bzw. an einem Flansch des Deckels befestigt werden.

Eine besondere Ausführungsform der Erfindung sieht zur Schaffung der elastischen Zone am Rohrende axial verlaufende Schlitze vor. Diese Schlitze sind konstruktiv einfach am Stützrohr vorzusehen. Das Stützrohr kann dann in einem Stück und aus einem Material gefertigt sein. Zur Unterstützung der elastischen Wirkung der durch die Schlitze entstehenden Zungen kann die Dicke der Zungen im Vergleich zu der Wandstärke des Stützrohres verringert werden.

Es ist ferner vorteilhaft, die Boden- und Deckelscheibe aus PUR-Schaum herzustellen. Das Filtermedium kann dann in dieses Material eingegossen werden. Durch dieses Verfahren lassen sich insbesondere Luftfilterpatronen kostengünstig herstellen.

Eine andere Variante sieht als Material für die Boden- und Deckelscheibe eine elastische Folie vor. Diese wird auf die Stirnseite des Filtermediums aufgebracht und anschließend erhitzt. Durch die Erhitzung härtet das Material aus und vergrößert gleichzeitig sein Volumen. Dadurch wird das Filtermedium und die elastische Zone des Stützrohres im Ausdehnungsbereich der Bodenscheibe fixiert. Die Restelastizität der Bodenscheibe nach dem Aushärtungsprozeß genügt, um eine Dichtwirkung gegenüber entsprechenden Aufnahmemitteln im Filtergehäuse zu erzielen.

Ein Vorteil des Filters besteht darin, daß durch das patronenfeste Mittelrohr für den Austausch des Filterelements nur ein kurzer Ausbauraum benötigt wird. Das Filterelement weist ferner den Vorteil auf, daß dieses über endseitig angebrachte Nocken axial fixiert werden kann und damit auch bei Erschütterungen und Schwingungen in seiner Sollposition gehalten wird. Der Austausch des Filterelements gestaltet sich problemlos, da das Filterelement vollständig thermisch entsorgt werden kann.

Diese und weitere Merkmale von bevorzugten Weiterbildungen der Erfindung gehen außer aus den Ansprüchen auch aus der Beschreibung und den Zeichnungen hervor.

Die Erfindung wird nachfolgend anhand eines Ausführungsbeispiels näher erläutert. Es zeigt:
- Figur 1: einen Halbschnitt durch ein Filter für die Ansaugluft einer Brennkraftmaschine,
- Figur 2: eine Draufsicht auf die Reinluftseite des Gehäuses.

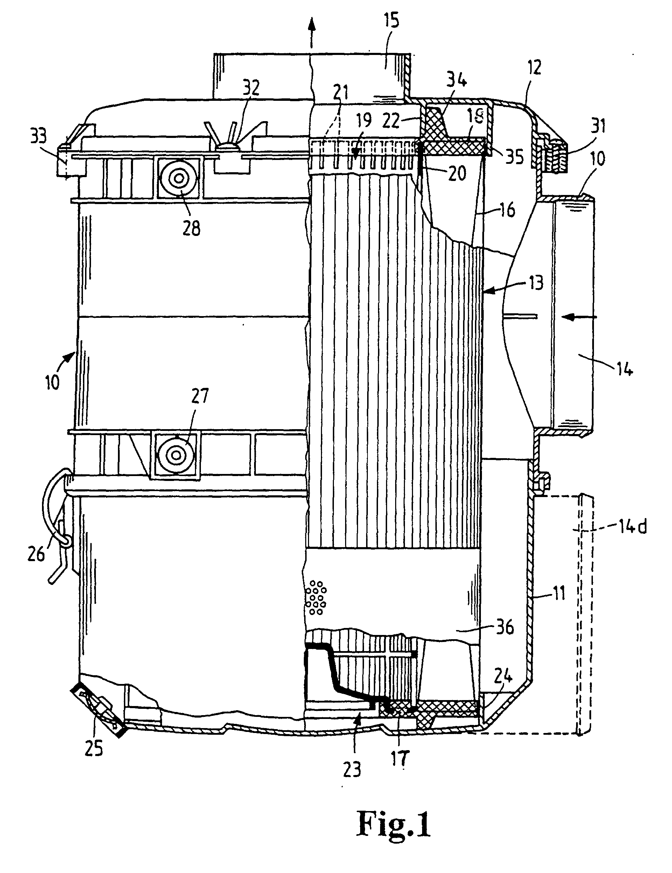

Das Filter gemäß Figur 1 besteht aus einem dreiteiligen Gehäuse mit einem Gehäusemantel 10, einem lösbar mit diesem verbundenen Topf 11 und einem Deckel 12. Im Gehäuse befindet sich ein Filterelement 13. Die zu filternde Luft tritt über den Rohlufteinlaß 14 in das Innere des Gehäuses ein, durchströmt das Filterelement 13 und verläßt über den Reinluftauslaß 15 das Filtersystem. Das Filterelement 13 besteht aus dem Filtermedium 16, welches zu einem zylindrischen Mantel ringförmig zusammengeschlossen ist. Die Stirnseiten des Filtermediums sind in die Bodenscheibe 17 und in die Deckelscheibe 18 eingegossen.

Im zylindrischen Innenraum 19 des Filterelements 13 befindet sich ein Stützrohr 20. Das auslaßseitige Ende des Stützrohres weist eine elastische Zone 21 auf, die durch axiale Schlitze im Rohrende gebildet wird. Da das Stützrohr 20 in die Bodenscheibe 17 mit eingegossen ist, weitet es sich mit diesem zusammen bei der Montage des Filterelements 13 auf dem Rohrstutzen 22 auf, so daß eine formschlüssige Verbindung zwischen Stützrohr 20 und Bodenscheibe 17 erhalten bleibt. Das Stützrohr 20 besteht aus einem zylindrischen Gitter, welches den Luftfluß nur unwesentlich stört und dabei eine ausreichende radiale Abstützung des Filtermediums 16 zum Innenraum 19 des Filterelements 13 hin gewährleistet.

An dem dem Reinluftauslaß 15 abgewandten Ende des Stützrohres ist ein deckelförmiger Abschluß 23 vorgesehen. Der Abschluß weist eine konvexe Gestalt auf, um dem zwischen dem Innenraum 19 und dem Gehäuseinneren herrschenden Druckunterschied standhalten zu können. Das untere Rohrende des Stützrohres 20 sowie der Abschluß des Filtermediums 16 sind in die Deckelscheibe 18 mit eingegossen. Dadurch kommt die Abdichtung in diesem Bereich zustande. Die Deckelscheibe 18 wird durch Abstützelemente 24 in ihrer Lage in Bezug auf den Topf 11 positioniert und fixiert insbesondere bei Schwingungsbeanspruchung das Filterelement 13.

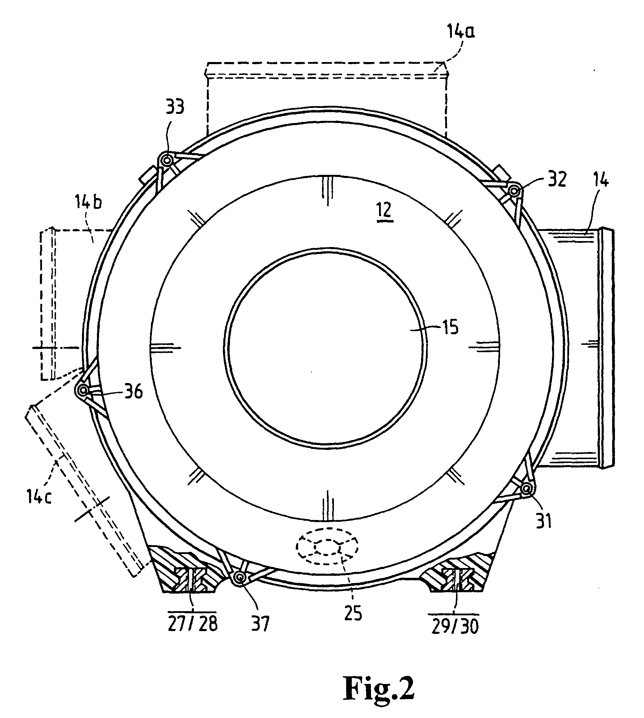

Der Topf 11 weist ein Wasseraustragsventil 25 auf. Dieses ist beispielsweise ein Schirmventil, welches aufgrund von Luftpulsationen kurzzeitig öffnet und im Deckelbereich vorhandenes Wasser nach außen fördert. Der Topf 11 ist mit Spannklammern 26 mit dem Gehäusemantel 10 verbunden und kann einfach gelöst werden. Der Gehäusemantel trägt Befestigungselemente 27, 28. Diese sind auch in Figur 2 dargestellt. Mit diesen Befestigungselementen kann das gesamte Filter an eine Trägerstruktur angeordnet werden.

Der Deckel 12 des Filters ist mit dem Gehäusemantel 10 über am Umfang verteilt angeordnete Schraubverbindungen 31, 32, 33 verbunden. Zusätzlich zu der Abdichtung des Filterelements 13 über den Dichtwulst 34 an dem Rohrstutzen 22 erfolgt eine Abstützung der Bodenscheibe 17 an Abstützelementen 35. Auch diese Abstützungen dienen zur Sicherung des Filterelements bei evtl. auftretenden Schwingungen. Zur Abstützung des Filterelementes in axialer Richtung sind am Deckel 18 Nocken angebracht. Diese verspannen das Filterelement 13 über das Stützrohr 20 mit dem Rohrstutzen 22 und dienen zugleich als Toleranzausgleich.

Figur 2 zeigt in der Draufsichtdarstellung von der Reinluftseite her gesehen das Filter mit dem Deckel 12. Es zeigt auch - in gestrichelter Darstellung - die Möglichkeit, den Rohlufteinlaß durch Drehen bzw. durch Einsätze am Werkzeug für den Gehäusemantel 10 an bestimmten Positionen 14a, 14b, 14c anzuordnen. Damit ist das Filter hinsichtlich des Rohluftanschlusses universell einsetzbar.

Eine weitere Variante besteht darin, den Rohlufteinlaß 14d am Topf anzubringen. Nun kann die Lage des Rohlufteinlasses an beliebiger Stelle am Umfang sein.

Das Filterelement 13 ist - wie in Figur 1 gezeigt - mit einem Lochmantel 36 abgeschirmt. Dieser Lochmantel dient als Griffschutz bei der Montage.

Die Abstützelemente 35 können in einer geeigneten Ausbildung des Filters ringförmig gestaltet sein und eine Staubdichtung bilden. Zu diesem Zweck liegt die Bodenscheibe 17 des Filterelements 13 formschlüssig an dieser ringförmigen Ausbildung an. Diese staubdichte Ausgestaltung hat den Vorteil, daß in den Dichtungsbereich mit dem Dichtwulst 34 kein Staub eintritt, der evtl. die Dichtungswirkung beeinflussen könnte.

## Patentansprüche

1. Filter, insbesondere für die Ansaugluft einer Brennkraftmaschine, bestehend aus einem Gehäuse mit einem Rohlufteinlaß und einem Reinluftauslaß, einem in dem Gehäuse angeordneten Filterelement, welches im wesentlichen aus einem sternförmig gefalteten Filtermedium besteht, wobei das Gehäuse wenigstens dreiteilig ist und aus einem zylinderförmigen Mittelteil (10), einem mit dem Mittelteil lösbar verbundenen Topf (11) und einem reinluftseitigen Deckel besteht, wobei innerhalb des sternförmig gefalteten Filtermediums (16) ein Stützrohr (20) angeordnet ist, **dadurch gekennzeichnet, daß** das Filtermedium (16) mit einer Bodenscheibe (17) und einer verformbaren Deckelscheibe (18) versehen ist und wobei das Stützrohr (20) mit der Deckelscheibe (18) im Formschluß steht und am Rohrende im Bereich der formschlüssigen Verbindung eine elastische Zone (21) aufweist.

2. Filter nach Anspruch 1, **dadurch gekennzeichnet, daß** der reinluftseitige Deckel (12) einen äußeren Flansch (15) zur Aufnahme der Reinluftleitung, einen inneren Flansch zur Radial- und/oder Axialabdichtung des Filterelements (13) aufweist.

3. Filter nach Anspruch 1 oder 2, **dadurch gekennzeichnet, daß** der Topf (11) Abstützelemente (24) zur Lagepositionierung des Filterelements (13) aufweist.

4. Filter nach einem der vorherigen Ansprüche, **dadurch gekennzeichnet, daß** das zylinderförmige Mittelteil (10) Befestigungselemente (27, 28, 30) zum Befestigen des Filters aufweist.

5. Filter nach einem der vorherigen Ansprüche, **dadurch gekennzeichnet, daß** innerhalb des im wesentlichen zylinderförmigen Filterelements (13) ein Sekundärelement zur Vermeidung des Staubeintrags in den Reinluftbereich beim Austausch des Filterelements (13) aufweist.

6. Filter nach Anspruch 1, **dadurch gekennzeichnet, daß** die elastische Zone (21) axial verlaufende Schlitze (21) aufweist.

7. Filterelement nach Anspruch 1, **dadurch gekennzeichnet, daß** die Deckelscheibe (18) aus einem elastischen Material, insbesondere PUR-Schaum besteht, in welches das Filtermedium (16) und die elastische Zone (21) des Stützrohres (20) eingegossen sind.

## Claims

1. Filter, more especially for the intake air of an internal combustion engine, said filter comprising a housing with an unfiltered air inlet and a filtered air outlet, a filter element which is disposed in the housing and is substantially formed from a radially folded filter medium, the housing having at least three parts and comprising a cylindrical central part (10), a cup-shaped container (11) which is detachably connected to the central part, and a cover on the filtered air side, a supporting tube (20) being disposed internally of the radially folded filter medium (16), **characterised in that** the filter medium (16) is provided with a bottom disc (17) and a deformable cover disc (18), and the supporting tube (20) being in form-locking communication with the cover disc (18) and having a resilient zone (21) at the tube end in the region of the form-locking connection.

2. Filter according to claim 1, **characterised in that** the cover (12), on the filtered air side, has an outer flange (15) for accommodating the filtered air pipe, and an inner flange for the radial and/or axial sealing of the filter element (13).

3. Filter according to claim 1 or 2, **characterised in that** the cup-shaped container (11) has supporting members (24) for positioning the filter element (13).

4. Filter according to one of the previous claims, **characterised in that** the cylindrical central part (10) has securing members (27, 28, 30) for securing the filter.

5. Filter according to one of the previous claims, **characterised in that** a secondary element is disposed internally of the substantially cylindrical filter element (13) to prevent dust from entering the filtered air region during the exchange of the filter element (13).

6. Filter according to claim 1, **characterised in that** the resilient zone (21) has axially extending slots (21).

7. Filter according to claim 1, **characterised in that** the cover disc (18) is formed from a resilient material, more especially expanded polyurethane, into which the filter medium (16) and the resilient zone (21) of the supporting tube (20) are integrally moulded.

## Revendications

1. Filtre, notamment pour l'air d'admission d'un moteur à combustion interne, composé d'un boîtier présentant une entrée d'air brut et une sortie d'air épuré et contenant un élément filtrant fait d'un matériau filtrant plié en forme d'étoile, le boîtier comportant au moins trois parties, à savoir une partie médiane (10) cylindrique, un pot (11) relié de manière séparable à la partie médiane et un couvercle du côté de l'air épuré, avec à l'intérieur du matériau filtrant (16) plié en étoile, un tube de soutien (20),
**caractérisé en ce que**
le matériau (16) de filtre porte un disque de fond (17) et un disque de couverture (18) déformable, le tube de soutien (20) étant en liaison verrouillée par combinaison de formes avec le disque de couverture (18) et présentant, à son extrémité située dans la zone de cette liaison, une zone élastique (21).

2. Filtre selon la revendication 1,
**caractérisé en ce que**
le couvercle (12) du côté de l'air épuré présente une bride externe (15) pour accueillir la conduite d'air épuré, ainsi qu'une bride interne pour assurer l'étanchéité radiale et/ou axiale de l'élément filtrant (13).

3. Filtre selon l'une quelconque des revendications 1 ou 2,
**caractérisé en ce que**
le pot (11) présente des éléments de soutien (24) pour positionner l'élément filtrant (13).

4. Filtre selon l'une quelconque des revendications précédentes,
**caractérisé en ce que**
la partie médiane (10) en forme de cylindre présente des éléments de fixation (27, 28, 30) pour fixer le filtre.

5. Filtre selon l'une quelconque des revendications précédentes,
**caractérisé en ce qu'**
il présente, à l'intérieur de l'élément filtrant (13) essentiellement cylindrique, un élément secondaire pour éviter que de la poussière pénètre dans la zone de l'air épuré quand on change l'élément filtrant (13).

6. Filtre selon la revendication 1
**caractérisé en ce que**
la zone élastique (21) présente des fentes (21) en direction axiale.

7. Filtre selon la revendication 1,
**caractérisé en ce que**
le disque de couverture (18) est fait d'un matériau élastique, en particulier une mousse de polyuréthane, dans laquelle le matériau filtrant (16) et la zone élastique (21) du tube de soutien (20) sont noyés par coulée.
